# EUROPÄISCHE PATENTANMELDUNG

(11) **EP 0 561 763 A1**
(43) Veröffentlichungstag der Anmeldung: **22.09.1993**
(21) Anmeldenummer: 93890041.2
(22) Anmeldetag: 12.03.1993
(51) Int. Cl.: G02C 1/02

(54) **Glashalterung für eine Brille**

(30) Priorität: 16.03.1992 AT 519/92
(71) Anmelder: SILHOUETTE INTERNATIONAL GESELLSCHAFT m.b.H., A-4021 Linz (AT)
(72) Erfinder: Fuchs,Gerhard, A-4061 Pasching (AT)
(74) Vertreter: Hübscher, Heiner, Dipl.-Ing.

(57) **Zusammenfassung**

Um bei einer Glashalterung für eine Brille mit paarweise angeordneten, in je eine Bohrung (10) des Brillenglases (4) eingreifenden, von einem Gestellteil (1) der Brille getragenen Halterungsstiften (9) besonders einfache Konstruktionsverhältnisse sicherzustellen, wird vorgeschlagen, daß die Halterungsstifte (9) aus den freien Schenkeln eines U-förmigen Drahtbügels (5) bestehen, der im Bereich seines die beiden Schenkel verbindenden Steges (6) mit dem Gestellteil (1) verbunden ist.

## Beschreibung

Die Erfindung bezieht sich auf eine Glashalterung für eine Brille mit paarweise angeordneten, in je eine Bohrung des Brillenglases eingreifenden, von einem Gestellteil der Brille getragenen Halterungsstiften.

Bei Brillen mit einer Glashalterung, die den Rand des Brillenglases frei läßt, werden die Brillengläser an dem die Glashalterung bildenden Gestellteil angeschraubt, und zwar mit Hilfe von Schrauben, die die Brillengläser in Durchgangsbohrungen durchsetzen und in ein Muttergewinde im Gestellteil eingreifen. Nachteilig bei dieser bekannten Glashalterung ist allerdings, daß wegen der vorgegebenen Muttergewinde im Gestellteil der Brille der auf den Gewindeabstand bezogene Abstand der in den Brillengläsern vorzusehenden Bohrungen in engen Toleranzbereichen eingehalten werden muß, was aufgrund der fehlenden Möglichkeit eines Toleranzausgleiches zu Schwierigkeiten beim Befestigen der Brillengläser führen kann. Dazu kommt noch, daß keine Möglichkeit einer nachträglichen Justierung der Brillengläser gegenüber dem Brillengestell besteht. Außerdem ist es erforderlich, im die Glashalterung bildenden Gestellteil Muttergewinde vorzusehen, die nicht nur arbeitsaufwendig sind, sondern auch eine bestimmte Mindestgröße des Gestellteiles verlangen.

Der Erfindung liegt somit die Aufgabe zugrunde, diese Mängel zu vermeiden, und eine Glashalterung für eine Brille der eingangs geschilderten Art so zu verbessern, daß ein Toleranzausgleich für die Bohrungen des Brillenglases und eine einfache Glasbefestigung sichergestellt werden können.

Die Erfindung löst die gestellte Aufgabe dadurch, daß die Halterungsstifte aus den freien Schenkeln eines U-förmigen Drahtbügels bestehen, der im Bereich seines die beiden Schenkel verbindenden Steges mit dem Gestellteil verbunden ist.

Durch die Verbindung der beiden Halterungsstifte zu einem U-förmigen Drahtbügel ergibt sich aufgrund der Verformbarkeit des Drahtbügels ein guter Toleranzausgleich hinsichtlich der in den Brillengläsern entsprechend dem Abstand der Halterungsstifte vorzunehmenden Bohrungen, so daß die Glasbefestigung erheblich vereinfacht wird. Da außerdem der Drahtbügel im Bereich seines die beiden Schenkel verbindenden Steges mit dem Gestellteil verbunden ist, eröffnet sich die Möglichkeit einer nachträglichen Justierung des Brillenglases gegenüber dem Brillengestell über eine entsprechende Verformung des Drahtbügels.

Die Halterung der Brillengläser auf den durch den Drahtbügel gebildeten Halterungsstiften kann in unterschiedlicher Weise erfolgen, beispielsweise durch ein nietartiges Aufweiten der durch die Bohrungen des Brillenglases durchtretenden Köpfe der Halterungsstifte. Wesentlich günstigere Befestigungsverhältnisse ergeben sich allerdings, wenn die Halterungsstifte über dübelartige Kunststoffbuchsen in den Bohrungen des Brillenglases gehalten sind, das somit lediglich auf die beispielsweise zuvor mit den Kunststoffbuchsen versehenen Halterungsstifte aufgesteckt zu werden braucht. Diese dübelartigen Kunststoffbuchsen dienen nicht nur zum Festklemmen des Brillenglases auf den Halterungsstiften, sondern verhindern, daß über die Halterungsstifte auf die Brillengläser unzulässige Spannungen ausgeübt werden können. Damit eine dübelartige Befestigung der Brillengläser auf den U-förmigen Drahtbügeln gewährleistet werden kann, muß sichergestellt sein, daß einerseits zwischen den Halterungsstiften und den Kunststoffbuchsen und anderseits zwischen den Kunststoffbuchsen und den Bohrungswandungen des Brillenglases ein ausreichender Reibungsschluß auftritt. Dies kann in einfacher Weise dadurch erreicht werden, daß die dübelartigen Kunststoffbuchsen und/oder die Halterungsstifte im Querschnitt widerhakenförmige Ringwülste aufweisen.

Eine andere Möglichkeit der Verbindung zwischen den Halterungsstiften und den Brillengläsern unter Zwischenschaltung eines Kunststoffkörpers besteht darin, daß die Halterungsstifte ein Gewinde zum Aufschrauben eines Halterungskopfes aus Kunststoff auf die in die Bohrungen der Brillengläser eingreifenden Halterungsstifte aufweisen. Zur Befestigung der Brillengläser brauchen diese nur auf die Halterungsstifte aufgesteckt und dann die Halterungsköpfe aufgeschraubt zu werden, die zu diesem Zweck vorteilhaft seitliche Abflachungen für einen Werkzeugangriff erhalten.

Damit die Halterung der Brillengläser nicht nur von der Steckverbindung zwischen den Gläsern und dem Drahtbügel abhängt, kann der Steg des Drahtbügels eine Anlage für das Brillenglas bilden, die die lagefixierung des Brillenglases unterstützt.

Die Befestigung des Drahtbügels an dem die Glashalterung bildenden Gestellteil der Brille kann in unterschiedlicher Weise erfolgen. Besonders günstige Konstruktions- und Herstellungsbedingungen ergeben sich jedoch, wenn der Drahtbügel über eine verformbare lötstelle mit dem Gestellteil der Brille verbunden ist, weil durch diese Maßnahme die Justierbarkeit der Brillengläser zusätzlich unterstützt wird. Solche verformbaren Lötstellen lassen sich in einfacher Weise anbringen, ohne besondere Beschränkungen hinsichtlich der Gestaltung der die Glashalterung bildenden Gestellteile in Kauf nehmen zu müssen.

In der Zeichnung ist der Erfindungsgegenstand beispielsweise dargestellt. Es zeigen
Fig. 1 eine Brille mit einer erfindungsgemäßen Glashalterung in einer vereinfachten Draufsicht,
Fig. 2 die Glashalterung in einem Längsschnitt durch den Drahtbügel in einem größeren Maßstab,
Fig. 3 einen Schnitt nach der Linie III-III der Fig. 1, jedoch ohne Brillenglas und
Fig. 4 eine der Fig. 2 entsprechende Darstellung einer Konstruktionsvariante.

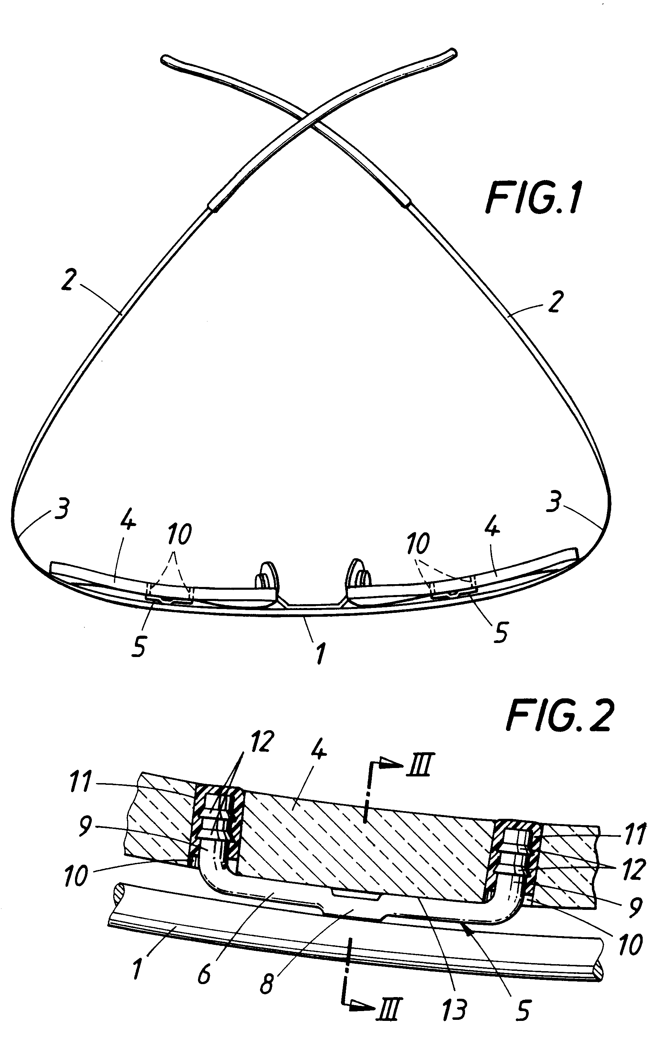

Gemäß dem in Fig. 1 dargestellten Ausführungsbeispiel besteht das Brillengestell aus einem Federdraht, der sowohl den die Glashalterung bildenden Gestellteil 1 als auch die Brillenbügel 2 bildet. Die Verschwenkbarkeit der Brillenbügel 2 gegenüber dem Gestellteil 1 wird jeweils durch einen abgeflachten Abschnitt 3 des Federdrahtes sichergestellt, der in diesen Abschnitten 3 Blattfedern darstellt, über die die Brillenbügel 2 aus der in Fig. 1 dargestellten Grundstellung in eine gegen den Gestellteil 1 eingeschwenkte Aufbewahrungsstellung einwärts gebogen oder in die Gebrauchsstellung aufgespreizt werden können.

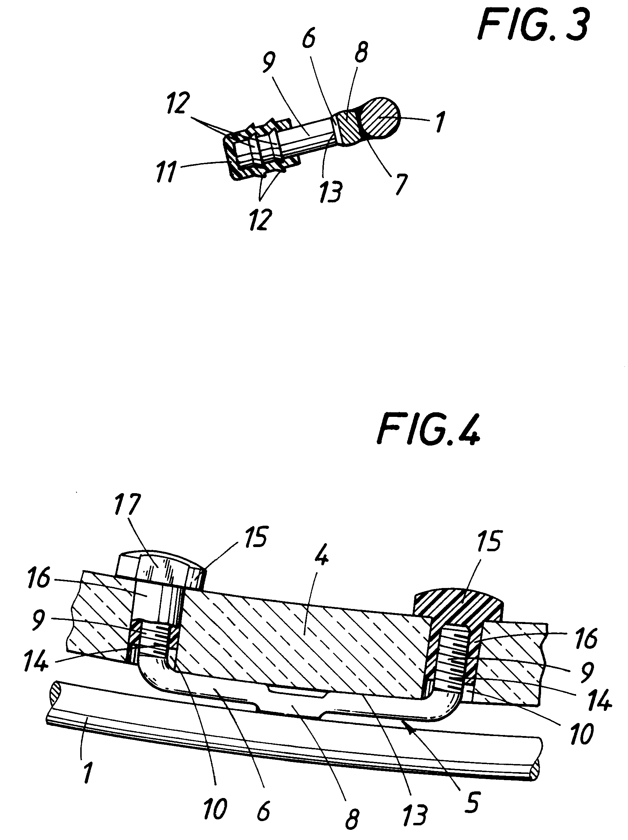

Die Brillengläser 4 sind mit dem drahtförmigen Gestellteil 1 über U-förmige Drahtbügel 5 verbunden, die im Bereich ihres die beiden Schenkel verbindenden Steges 6 mit dem Gestellteil 1 verbunden sind, und zwar durch eine in Fig. 3 angedeutete, verformbare Lötstelle 7. Zu diesem Zweck sind die U-förmigen Drahtbügel 5 in der Stegmitte ausgekröpft, wobei die mit 8 bezeichnete Kröpfung die Lötverbindung erleichtert. Die abstehenden freien Schenkel des U-förmigen Drahtbügels 5 dienen als Halterungsstifte 9 für die Brillengläser, die in Bohrungen 10 der Brillengläser 4 eingreifen und über dübelartige Kunststoffbuchsen 11 in den Bohrungen gehalten werden. Um einen entsprechenden Reibungsschluß zwischen den Halterungsstiften 9 und den Kunststoffbuchsen 11 sowie zwischen den Kunststoffbuchsen 11 und der Wandung der Bohrungen 10 sicherzustellen, sind gemäß dem Ausführungsbeispiel nach der Fig. 3 sowohl die Halterungsstifte 9 als auch die Kunststoffbuchsen 11 mit im Querschnitt widerhakenförmigen Ringwülsten 12 versehen. Es ist aber durchaus möglich, nur die Halterungsstifte mit solchen Ringwülsten auszustatten, die ja das Material der eingesetzten Kunststoffbuchse 11 nach außen verdrängen. Die Kunststoffbuchsen 11 könnten in diesem Fall auch mit einem Halterungskopf versehen sein und vor dem Einsetzen der Halterungsstifte 9 in die Bohrungen 10 der Brillengläser 4 von außen eingesetzt werden.

Zur Verbindung der Brillengläser 4 mit dem Gestellteil 1 sind in den Brillengläsern 4 lediglich die Bohrungen 10 in einem an die Halterungsstifte 9 angepaßten Abstand anzubringen, wobei ein einfacher Toleranzausgleich einerseits über die Kunststoffbuchsen 11 und anderseits über die Verformbarkeit der U-förmigen Drahtbügel 5 möglich ist. Da die Drahtbügel 5 mit ihrem Steg 6 aufgrund einer Abflachung des sonst runden Drahtes eine flächige Anlage 13 für die Brillengläser 4 bilden, ergibt sich für die Brillengläser 4 eine gute Halterung, die wegen der Verformbarkeit der Drahtbügel 5 und der Lötstellen 7 auch eine nachträgliche Justierung der Brillengläser 4 gegenüber dem Gestellteil 1 erlaubt.

Eine weitere Möglichkeit der Befestigung der Brillengläser 4 auf den Halterungsstiften 9 ist in der Fig. 4 dargestellt. Die Halterungsstifte 9 sind in diesem Fall mit Gewinden 14 versehen, auf die Halterungsköpfe 15 aus Kunststoff aufgeschraubt werden können, die mit hülsenartigen Ansätzen 16 in die Bohrungen 10 der Brillengläser 4 eingreifen. Aufgrund des für die Halterungsköpfe 15 gewählten Werkstoffes brauchen die Halterungsköpfe 15 nicht mit einem Muttergewinde versehen zu werden. Zur besseren Handhabung der Halterungsköpfe 15 weisen diese seitliche Abflachungen 17 für einen Werkzeugangriff auf.

Die Erfindung ist selbstverständlich nicht auf das dargestellte Ausführungsbeispiel beschränkt. Insbesondere ist es nicht erforderlich, ein Brillengestell in Form eines Federdrahtes vorzusehen. Voraussetzung für die Anwendbarkeit der Erfindung ist lediglich, daß die U-förmigen Drahtbügel 5 mit einem Gestellteil verbunden werden können, was für die Gestaltung der Gestellteile kaum eine Einschränkung mit sich bringt. So könnten z. B. die Brillengläser 4 über die erfindungsgemäßen Drahtbügel an einem die Brillengläser verbindenden Nasenbügel befestigt werden, während die Ohrenbügel in herkömmlicher Weise über Scharniergelenke an Bügelbacken angesetzt sind, die wiederum über Drahtbügel mit den Brillengläsern verbunden sind.

## Patentansprüche

1. Glashalterung für eine Brille mit paarweise angeordneten, in je eine Bohrung (10) des Brillenglases (4) eingreifenden, von einem Gestellteil (1) der Brille getragenen Halterungsstiften (9), dadurch gekennzeichnet, daß die Halterungsstifte (9) aus den freien Schenkeln eines U-förmigen Drahtbügels (5) bestehen, der im Bereich seines die beiden Schenkel verbindenden Steges (6) mit dem Gestellteil (1) verbunden ist.

2. Glashalterung nach Anspruch 1, dadurch gekennzeichnet, daß die Halterungsstifte (9) über dübelartige Kunststoffbuchsen (11) in den Bohrungen (10) des Brillenglases (4) gehalten sind.

3. Glashalterung nach Anspruch 2, dadurch gekennzeichnet, daß die dübelartigen Kunststoffbuchsen (11) und/oder die Halterungsstifte (9) im Querschnitt widerhakenförmige Ringwülste (12) aufweisen.

4. Glashalterung nach Anspruch 1, dadurch gekennzeichnet, daß die Halterungsstifte (9) ein Gewinde (14) für einen auf die in die Bohrungen (10) des Brillenglases (4) eingreifenden Halterungsstifte (9) aufschraubbaren Halterungskopf (15) aus Kunststoff aufweisen.

5. Glashalterung nach einem der Ansprüche 1 - 4, dadurch gekennzeichnet, daß der Steg (6) des Drahtbügels (5) eine Anlage (13) für das Brillenglas (4) bildet.

6. Glashalterung nach einem der Ansprüche 1 - 5, dadurch gekennzeichnet, daß der Drahtbügel (5) über eine verformbare Lötstelle (7) mit dem Gestellteil (1) der Brille verbunden ist.
